# EUROPEAN PATENT APPLICATION

(11) **EP 4 838 330 A1**
(43) Date of publication of application: **11.11.2026**
(21) Application number: 26176845.1
(22) Date of filing: 06.05.2026
(51) Int. Cl.: G05D 23/19

(54) **SYSTEM AND METHOD FOR THERMAL MANAGEMENT OF AN ELECTRICAL WINDSHIELD OF A VEHICLE**

(30) Priority: 09.05.2025 IT 202500010482
(71) Applicant: FERRARI S.p.A., 41100 Modena (IT)
(72) Inventor: VATA, Klajdi, 41100 MODENA (IT); D'ANGELO, Enrico, 41100 MODENA (IT); SACCO, Paolo, 41100 MODENA (IT); STAFFIERE, Maria, 41100 MODENA (IT)
(74) Representative: Studio Torta S.p.A.

(57) **Abstract**

A thermal management system (20) for an electrical windshield (1) of a motor vehicle (10) is described, which is integrally provided with a heating element (2), having: a sensor assembly (8) coupled to the electrical windshield (1) at a coupling area (9) to provide a glass temperature signal (S_{GT}) indicative of the temperature of the electrical windshield; and a digital processing unit (21) that generates a control signal (S_{c}) to control the heating of the electrical windshield by means of a feedback control based on the generation of a target glass temperature (T_{TGT}) and on the glass temperature signal. The digital processing unit comprises a generation stage (32) for an initial target temperature (T_{TGTin}) for the electrical windshield (1), based on a dew point temperature (T_{DP}) determined inside the passenger compartment (14); and applies a correction factor to the initial target temperature to generate the target glass temperature (T_{TGT}), as a function of a correlation between the temperature detected at the coupling area and different temperatures of the electrical windshield at at least one corresponding cold area, or "cold spot," and at least one corresponding hot area, or "hot spot".

## Description

### CROSS-REFERENCE TO RELATED APPLICATIONS

This patent application claims priority from Italian patent application no. 102025000010482 filed on May 9, 2025, the entire disclosure of which is incorporated herein by reference.

### TECHNICAL FIELD

This solution relates to a system and method for thermal management of an electrical windshield of a vehicle, in particular of a motor vehicle.

### PRIOR ART

It is a well-known requirement in motor vehicles to defrost and demist the windshield in order to ensure driving safety and in any case not to obstruct visibility for the driver and occupants of the passenger compartment.

Motor vehicles are known to be equipped with air vents (or diffusers), coupled to the air conditioning system, suitably oriented to direct an adequate flow of heated air towards the windshield, in order to carry out the aforementioned defrosting and demisting operations. These air vents are typically conveniently positioned at the vehicle's dashboard.

It is also known for a control unit of the vehicle's air conditioning system to implement suitable logic to automatically manage the temperature of the air flow supplied inside the vehicle's passenger compartment, based on a temperature measurement inside the same passenger compartment.

Typically, a sensor assembly (so-called "sun sensor" or "sun load sensor") installed in the passenger compartment centrally at the top of the windshield (typically at the base of the interior rear-view mirror) is used for this purpose, providing a variety of information, including the glass temperature, air temperature and relative humidity inside the passenger compartment. In a known manner, this sensor assembly can also provide additional information, for example by acting as a rain sensor and dusk sensor.

Based on the relative humidity and temperature data provided by this sensor assembly, the air conditioning system control unit can calculate the air dew point temperature, i.e. the temperature at which the air humidity would condense causing the windshield to fog up, and adjust the temperature of the air flow delivered into the passenger compartment accordingly, taking into account the temperature of the windshield glass. In this way, fogging of the windshield can be avoided, or at least reduced, and safety and comfort improved.

This conventional solution generally provides the desired defrosting and demisting functionality.

However, certain situations may occur, for which this solution may not be entirely efficient and timely; moreover, this solution requires, as mentioned above, the installation of the air vents at appropriate positions facing the windshield and the provision of corresponding ventilation ducts within the dashboard.

In some recently manufactured motor vehicles, the use of electric, or thermal, windshields has been proposed, being internally equipped with suitable heating elements that allow them to be heated when electrically powered.

In particular, windshields have been proposed that include a film or coating of metallic material integrated into the layered structure of a corresponding laminated glass, which is electrically powered via a bus bar to cause it to heat up (with the resulting heat generated radiating outwards to the outer layers of the glass).

This solution is certainly advantageous in that it allows, in combination with the use of air vents and the associated flow of heating air, a more effective and timely performance of windshield defrosting and demisting operations.

However, even this solution is not without its drawbacks. In particular, the present Applicant has found that a resulting temperature distribution on the electrical windshield can be highly heterogeneous, generating cold spots that can be more easily subject to icing or fogging and hot spots that can reach high temperatures with associated risks of breakage (cracking) of the glass and/or heating element.

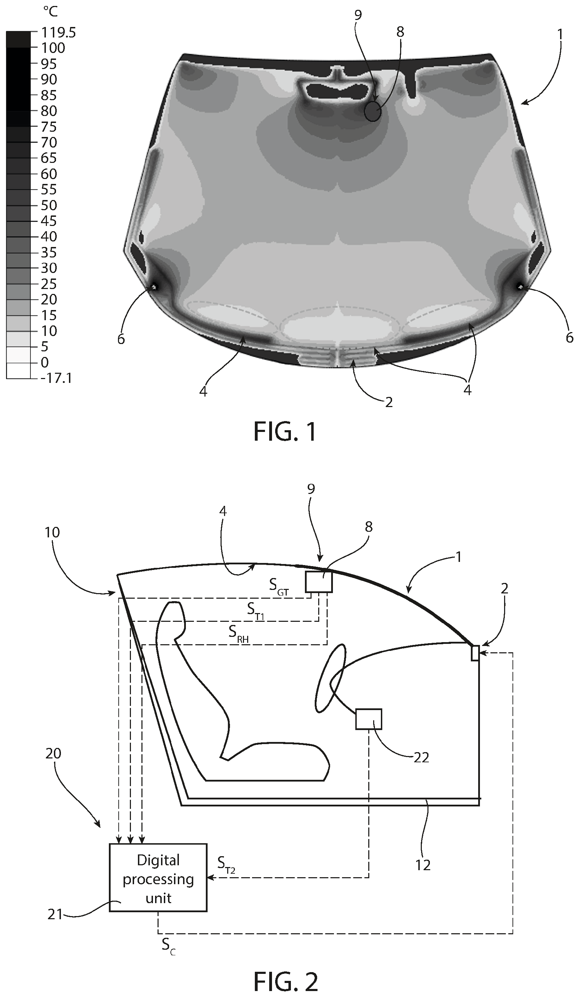

In this respect, Figure 1 shows a possible temperature distribution in an electrical windshield, shown as a whole with reference number 1, heated by means of a heating element, shown schematically with reference number 2, comprising a metal film or coating integrated into the glass and a bus bar that is arranged in the example at one of its perimeter portions.

The shape and position of this bus bar result in a corresponding heterogeneous temperature distribution on the electrical windshield 1, with the resulting formation of cold spots, denoted by reference number 4, and hot spots, denoted by reference number 6.

Figure 1 also shows the position of the sun sensor, indicated by reference number 8, coupled to the electrical windshield 1 at a coupling area, indicated by reference number 9, located in the example near the base of the rear-view mirror, configured to provide, among other information, an indication of the temperature of the glass at the position in which it is located.

In general, a need is therefore felt for a more efficient solution to the above-mentioned problem of thermal management of windshields, especially electrical windshields, of vehicles.

### OBJECT OF THE INVENTION

An object of the present disclosure is to provide a solution for the thermal management of an electrical windshield, which can meet the above requirement, preferably in a simple and reliable manner.

In accordance with the object indicated above, according to the present solution a system and a method are provided, as defined in the attached claims.

### BRIEF DESCRIPTION OF THE DRAWINGS

This invention will now be described with reference to the accompanying drawings, which illustrate a non-limiting embodiment thereof, wherein:
- Figure 1 shows a possible heterogeneous temperature distribution across an electrical windshield, due to the action of a corresponding heating element;
- Figure 2 schematically shows a portion of a motor vehicle provided with an electrical windshield and a thermal management system of the same electrical windshield;
- Figure 3A shows plots of the temperature trend at respective areas of the electrical windshield;
- Figure 3B shows a characterization map of the electrical windshield;
- Figure 4 is a schematic block diagram of the thermal management system, according to an embodiment of the present solution; and
- Figure 5 is a schematic block diagram of a monitoring system control stage, according to another aspect of the present solution.

### DETAILED DESCRIPTION OF THE EMBODIMENTS

Figure 2 schematically shows a portion of a vehicle, in particular a motor vehicle 10, provided with a body 12 resting on the ground by means of wheels (not shown here) and internally defining a passenger compartment 14 for a driver and possible passengers.

The passenger compartment 14 is bounded at the front (with respect to a direction of travel) by a windshield, in particular an electrical windshield, again denoted with reference number 1, internally equipped with a heating element, again schematically denoted with reference number 2, comprising a metal film or coating integrated into the layered structure of the glass and a bus bar, coupled to the metal film or coating to cause it to heat up (for example, the bus bar being arranged at a perimeter portion of the same electrical windshield 1).

According to an aspect of the present solution, the motor vehicle 10 comprises a thermal management system 20 configured to control the temperature of the electrical windshield 1, in particular so as to implement at least defrosting and demisting functions.

The thermal management system 20 comprises a digital processing unit 21 (provided with a microprocessor, microcontroller, or the like), configured to implement the aforementioned thermal management; to this end, the digital processing unit 21 comprises a non-volatile memory that stores data and software instructions (firmware) to perform the aforementioned monitoring.

In one embodiment, the digital processing unit 21 may be the same as, or part of, an electronic control unit (ECU) of the motor vehicle 10, designed to monitor the general operation of the same motor vehicle 10 (in a known way, not illustrated herein); or, this digital processing unit 21 may be the same as, or part of, a control unit of the air conditioning system of the motor vehicle 10.

As shown in Figure 2, in one possible embodiment, the digital processing unit 21 is operationally coupled to a sun sensor of the motor vehicle 10, again denoted with reference number 8, which provides, among other information, a glass temperature signal S_{GT}, indicative of the temperature of the glass at the coupling area 9 with the electrical windshield 1 (arranged, for example, at the base of the rear-view mirror) .

As discussed above, this sun sensor 8 represents a sensor assembly configured to additionally provide indications of air temperature and relative humidity within the passenger compartment 14 (as well as further information, for example acting as a rain sensor and/or dusk sensor). In particular, the sun sensor 8 provides a first temperature signal S_{T1}, indicative of the temperature of the passenger compartment 14 at the sun sensor 8 (that is, at the coupling area 9) and a relative humidity signal S_{RH}.

The digital processing unit 21 is also operationally coupled to a cabin temperature sensor 22, for example arranged at a lower portion of the dashboard within the passenger compartment 14, which provides a second temperature signal S_{T2}, indicative of the temperature of the passenger compartment 14 at the same dashboard.

As will be described in detail below, the digital processing unit 21 is configured to determine, also based on the aforementioned first and second temperature signals S_{T1}, S_{T2}, a control signal S_{c}, which is supplied to the electrical windshield 1, more precisely to the corresponding heating element 2 to implement a thermal management logic (in particular, to perform at least the aforementioned defrosting and demisting functions). In one possible embodiment, this control signal S_{c} is generated by means of a feedback control based on the generation of a target glass temperature and the aforementioned glass temperature signal S_{GT}, that is, the glass temperature detected at the sun sensor 8.

In particular, the digital processing unit 21 is configured to implement a correlation between the temperature of the glass detected by the sun sensor 8 and the general thermal behaviour of the electrical windshield 1, with reference to the corresponding cold spots (indicated with reference number 4 in Figure 1 above) and hot spots (indicated with reference number 6 in Figure 1 above).

This correlation also allows to "virtualize" temperature measurement at the aforementioned cold spots and hot spots (that is, to dispense with additional physical or real temperature sensors); and to correlate the temperature indications associated with the glass temperature signal S_{GT} with acceptable operating limits for the electrical windshield 1 (with particular reference to critical, maximum or minimum, tolerable temperatures) in such a way that the thermal management of the electrical windshield 1 does not result in these operating limits being exceeded.

In one embodiment, this correlation is the result of simulations and numerical calculations, as well as experimental testing and validation.

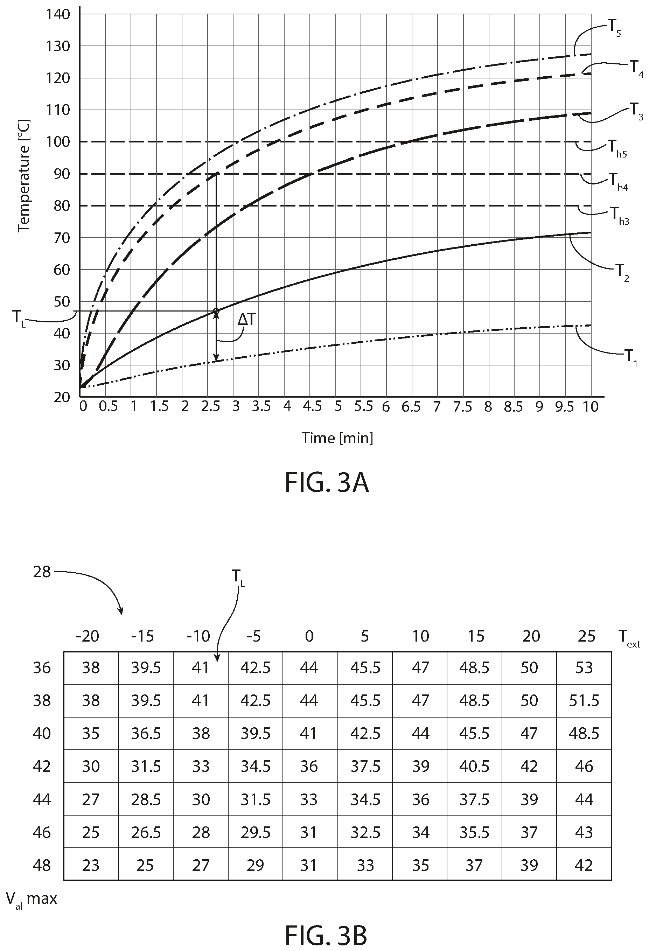

In this respect, Figure 3A shows a possible time trend of the temperature that can be experimentally detected at different areas of the electrical windshield 1, and in particular of: a first temperature T₁, at a cold area or "cold spot" 4; a second temperature T₂, at the sun sensor 8 (thus associated with the aforementioned glass temperature signal S_{GT}); and a third, a fourth and a fifth temperature T₃, T₄, T₅, at respective hot spots 6.

These trends are determined by the application of a given supply voltage Vₐₗ to the heating element 2 of the electrical windshield 1, starting from a given initial temperature of the same electrical windshield 1 (before its heating), in the example around 25°C.

In general, these temperature trends have a first dynamic portion, with a respective increase from the initial temperature value, and a second static portion, settling around a respective final temperature value.

The same Figure 3A also shows respective critical temperature thresholds Tₕ₃, Tₕ₄, Tₕ₅ for the glass (dependent, for example, on its composition and/or shape), associated with each of the aforementioned hot spots 6 and the associated third, fourth and fifth temperatures T₃, T₄, T₅. If the respective temperatures (T₃, T₄, T₅) exceed these critical temperature thresholds Tₕ₃, Tₕ₄, Tₕ₅, problems may arise and possible damage (or breakage) of the electrical windshield 1, thus representing a limitation for the thermal management of the electrical windshield 1.

From the trend of the aforementioned temperatures, a limit temperature T_{L} of the glass of the electrical windshield 1 (as detected by the sun sensor 8, at the corresponding coupling area 9) can be derived for the indicated conditions, as the temperature that results in a first exceeding of the critical temperature threshold (in the example, of the critical temperature threshold Tₕ₄ by the fourth temperature T₄).

In other words, this limit temperature T_{L} defines a separation between a first range of temperatures (below the same limit temperature T_{L}) that are considered acceptable for the operation of the electrical windshield 1; and a second range of temperatures (equal to or above the same limit temperature T_{L}) that are considered unacceptable for the operation of the same electrical windshield 1.

This limit temperature T_{L} thus represents, for the given operating condition (in terms of supply voltage Vₐₗ and initial temperature of the electrical windshield 1), a maximum operating temperature for the operation of the electrical windshield 1 (which has not to be exceeded in order to ensure reliability).

As shown in the same Figure 3A, the second temperature T₂, detected at the sun sensor 8, has values that are intermediate with respect to the first temperature T₁, at cold spots 4 and the third, fourth and fifth temperatures T₃, T₄, T₅, at respective hot spots 6.

In particular, a temperature deviation, denoted by ΔT in Figure 3A, can be defined between the values of the second temperature T₂ and the first temperature T₁; for example, this temperature deviation ΔT can be defined between the values (considered at a same time reference) of the aforementioned limit temperature T_{L} and the first temperature T₁ (in the example, the temperature deviation ΔT being approximately 13°C).

Thus, one aspect of the present solution involves the definition, by means of simulations, numerical calculations and experimental tests, of one or more characterization maps of the electrical windshield 1 correlating various operating conditions, in terms of possible maximum values of the supply voltage Vₐₜ and of the initial temperature of the electrical windshield 1, to respective values of the aforementioned limit temperature T_{L} (that is, the maximum acceptable temperature of the glass at the sun sensor 8) and associated respective temperature deviations ΔT (with respect to the cold spot).

A possible characterization map is shown in Figure 3B, where it is denoted in general by reference number 28, including respective limit temperature values T_{L} as a function of respective values of the supply voltage Vₐₗₘₐₓ and of the initial temperature of the electrical windshield 1 (denoted here by Tₑₓₜ, since it generally coincides, at initial conditions, with the temperature of the environment outside the passenger compartment 14 of the motor vehicle 10) .

As will be described in detail, according to one aspect of the present solution, the thermal management logic of the electrical windshield 1 implemented by the digital processing unit 21 also make use of the aforementioned characterization map 28 in order to establish the control target temperatures (so-called target temperatures), which allow the predetermined objectives (of defrosting and demisting) to be achieved, while safeguarding the integrity and reliability of this electrical windshield 1.

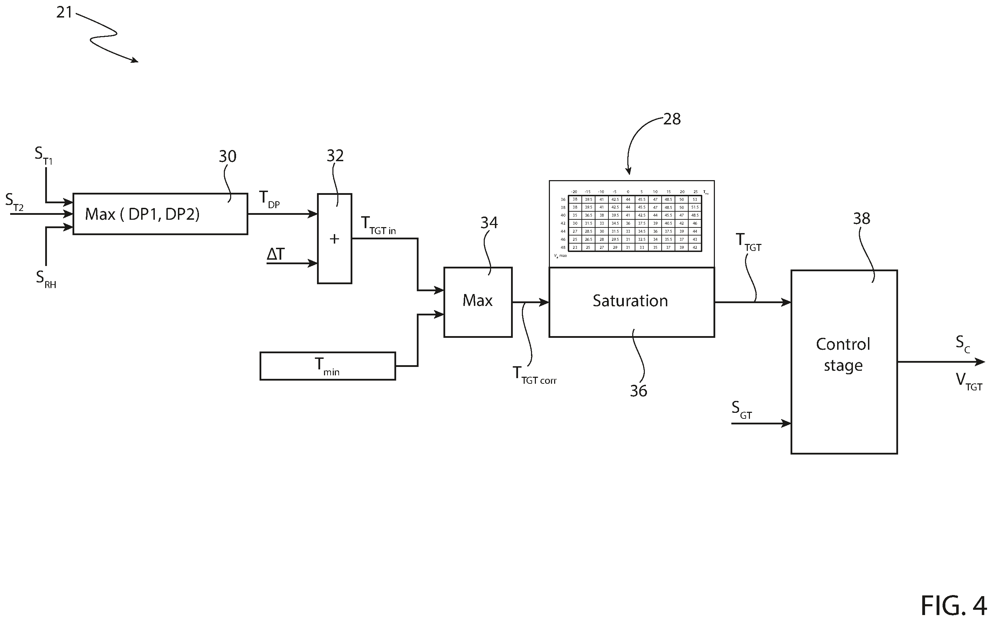

Specifically, and now referring to Figure 4, this digital processing unit 21 comprises a determination stage 30, for determination of the dew point of the air inside the passenger compartment 14, which receives at an input the first temperature signal S_{T1} from the sun sensor 8 and the second temperature signal S_{T2} from the cabin temperature sensor 22; the same determination stage 30 also receives the relative humidity signal S_{RH} indicative of the relative humidity value inside the passenger compartment 14 and detected by the same sun sensor 8.

The determination stage 30 is configured to calculate a first dew point temperature (DP1) based on the relative humidity value and passenger compartment 14 temperature at the same sun sensor 8; and a second dew point temperature (DP2) based on the same relative humidity value and the temperature in the passenger compartment 14, at the dashboard.

The determination of the dew point is carried out by means of known relations and computing methods, not described in detail here, for example on the basis of the Magnus-Tetens approximation.

The determination stage 30 is configured to generate a dew point temperature T_{DP} as the maximum between the aforementioned first dew point temperature DP1 and second dew point temperature DP2. To prevent fogging of the windshield, in a known manner, the glass temperature has to be above this dew point temperature T_{DP}.

The digital processing unit 21 further comprises a generation stage 32, configured to generate an initial target temperature T_{TGTin} for the electrical windshield 1, based on the aforementioned dew point temperature T_{DP}.

In particular, the generation stage 32 generates the initial target temperature T_{TGTin} by adding to the aforementioned dew point temperature T_{DP} a correction factor, which takes into account the deviation between the glass temperature measured at the sun sensor 8 and the glass temperature at the cold spot.

For example, the dew point temperature T_{DP} is increased by the temperature deviation ΔT, for the generation of the initial target temperature T_{TGTin}.

The temperature deviation ΔT is generally a function of the external (or ambient) temperature and the initial temperature of the glass; as mentioned above, this temperature deviation ΔT can be determined at an initial stage (of simulation and experimental tests).

The digital processing unit 21 further comprises a first correction stage 34, which receives at an input the aforementioned initial target temperature T_{TGTin} and also a minimum temperature value Tₘᵢₙ and is configured to output a corrected target temperature T_{TGTcorr}, as the maximum (max) between the initial target temperature T_{TGTin} and the minimum temperature value Tₘᵢₙ.

In particular, the minimum temperature value Tₘᵢₙ corresponds to a minimum glass temperature (again considered at the sun sensor 8) that ensures that the electrical windshield 1 is totally free of ice (thus ensuring the defrosting function). The minimum temperature value Tₘᵢₙ is a function of the outside (or ambient) temperature and the temperature of the glass, generally being above 0°C by a certain margin.

The digital processing unit 21 further comprises a second correction stage 36, which receives at an input the corrected target temperature T_{TGTcorr} and is configured to output the actual target temperature T_{TGT} for thermal management of the electrical windshield 1, based on a saturation function that takes into account the temperature limits due to the presence of hot spots, which are at higher temperatures, in order to safeguard the integrity of the electrical windshield 1 (and its associated components).

In particular, the second correction stage 36 takes into account the aforementioned characterization maps 28 of the electrical windshield 1 and in particular the limit temperature values T_{L} as a function of the values of supply voltage Vₐₜ and external (or ambient) temperature, so as to saturate the actual target temperature T_{TGT} with reference to the same limit temperature values T_{L}.

In one possible embodiment, the second correction stage 36 is configured to generate the actual target temperature T_{TGT} as a minimum between the aforementioned corrected target temperature T_{TGTcorr} and the limit temperature value T_{L} provided by the characterization map according to the specific operating conditions.

Overall, therefore, the target temperature T_{TGT} ensures the desired defrosting and demisting functions, while safeguarding the reliability and safety of the components.

The digital processing unit 21 further comprises a control stage 38, configured to receive the target temperature T_{TGT}, as the actual control target, and in addition the glass temperature measured by the sun sensor 8 (thus receiving the glass temperature signal S_{TG} provided by the same sun sensor 8), as a feedback measurement.

The control stage 38 is configured to implement a feedback control, for example a PID (Proportional-Integral-Derivative) control, to output the control signal S_{c}, which is supplied to the electrical windshield 1, more precisely to the corresponding heating element 2, to implement the desired thermal management logic.

In the embodiment illustrated in Figure 4, this control signal S_{c} is a target voltage (V_{TGT}) that is supplied to the heating element 2 of the electrical windshield 1.

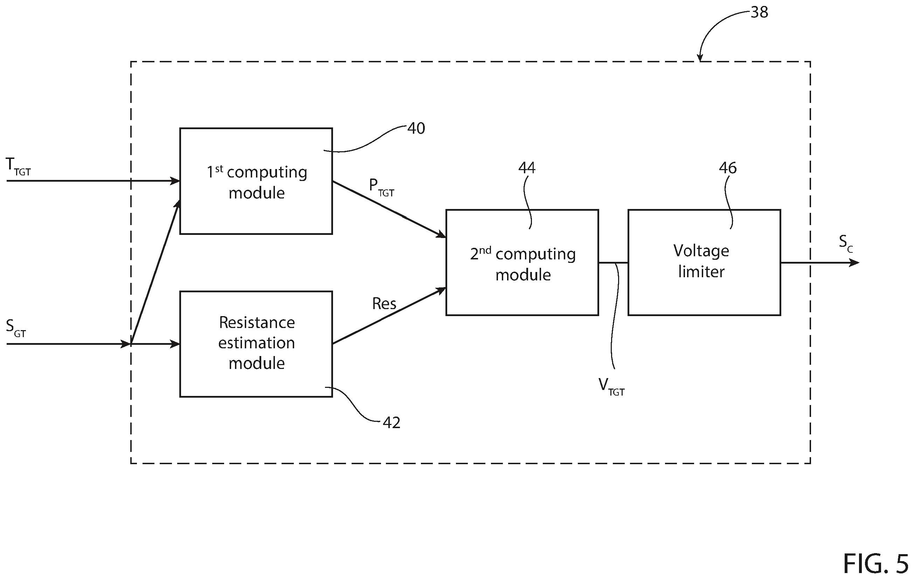

As shown in Figure 5, in one possible embodiment, the control stage 38 comprises a first computing module 40 for determining an electrical power target P_{TGT} to be provided for heating the electrical windshield 1, based on the target temperature T_{TGT} and the glass temperature measured by the sun sensor 8 (based on the glass temperature signal S_{TG}).

The control stage 38 further comprises an estimation module 42, configured to perform an estimation of the electrical resistance Res of the heating element 2 integrated within the electrical windshield 1, also based on the glass temperature measured by the sun sensor 8 (since the resistance also depends on this temperature).

The control stage 38 thus comprises a second calculation module 44 for determining the voltage target V_{TGT} to be provided for the heating of the electrical windshield 1, which is calculated on the basis of the aforementioned electrical power target P_{TGT}, of the aforementioned estimate of the electric resistance Res and, in addition, of an electrical model of the electrical windshield 1.

The control stage 38 further comprises a voltage limiting module 46, coupled to the output of the second computing module 44, so as to receive the voltage target V_{TGT} and configured to implement a voltage limiting function, providing as an output the aforementioned control signal S_{c} for thermal management of the electrical windshield 1 (that is, the voltage that is supplied to the corresponding heating element 2).

The advantages that the present solution allows to achieve are clear from what has been discussed.

In any case, it is underlined that the present solution enables efficient thermal management of a motor vehicle's electrical windshield, guaranteeing defrosting and demisting functions under all operating conditions, while safeguarding the integrity of the components, actually taking into account the temperature limits that the windshield can withstand.

Advantageously, the proposed solution does away with the need for dashboard air vents directed towards the windshield and associated ventilation ducts, as the aforementioned thermal management can be ensured exclusively by using the heating element integrated in the electrical windshield.

The solution described also makes it possible to dispense with additional temperature sensors dedicated to detecting the temperatures of the various zones (hot and cold) of the electrical windshield, since this temperature detection is advantageously "virtualized" (that is, related to the sun sensor and the temperatures detected by the sun sensor, based on calculations, simulations and preliminary experimental tests) .

Furthermore, the described solution achieves a better and more accurate determination of the dew point temperature by exploiting not only the temperature information provided by the aforementioned sun sensor but also the temperature information provided by the cabin temperature sensor, located at the dashboard.

Lastly, it is clear that modifications and variations may be made to what described herein, without departing from the scope of the present invention, as set forth in the attached claims.

In particular, it is underlined that the solution described can be advantageously applied to any type of vehicle, especially motor vehicles, that use an electrical windshield.

The present solution is particularly advantageous in the case of electric or hybrid vehicles, as it is possible to make use of a high supply voltage provided by a corresponding high-voltage battery pack to power the heating element integrated in the electrical windshield (for example, with maximum supply voltages in the order of 48V, or higher).

## Claims

1. A thermal management system (20) for an electrical windshield (1) delimiting a passenger compartment portion (14) of a motor vehicle (10) and integrally provided with a heating element (2), the system comprising:
a sensor assembly (8) coupled inside said passenger compartment (14) to the electrical windshield (1) at a coupling area (9) and configured to provide a glass temperature signal (S_{GT}) indicative of the temperature of the electrical windshield (1) at said coupling area (9); and
a digital processing unit (21) configured to generate a control signal (Sc) designed to be provided to said heating element (2) to control the heating of said electrical windshield (1) by means of a feedback control based on the generation of a target glass temperature (T_{TGT}) and on said glass temperature signal (S_{GT}),
wherein said digital processing unit (21) comprises a generation stage (32), configured to generate an initial target temperature (T_{TGTin}) for the electrical windshield (1), based on a dew point temperature (T_{DP}) determined inside the passenger compartment (14); said digital processing unit (21) being further configured to correct said initial target temperature (T_{TGTin}) to generate said target glass temperature (T_{TGT}), as a function of a correlation between the temperature detected at said coupling area (9) and different temperatures of the electrical windshield (1), at at least one corresponding cold area, or "cold spot," and at least one corresponding hot area, or "hot spot".

2. The system according to claim 1, wherein said digital processing unit (21) is configured to store at least one characterization map (28) of said electrical windshield (1), representative of said correlation between the temperature detected at said coupling area (9) and the temperature of the electrical windshield (1) at the at least one corresponding cold area, or "cold spot" and the at least one corresponding hot area, or "hot spot".

3. The system according to any of the preceding claims, wherein said generation stage (32) is configured to generate said initial target temperature (T_{TGTin}) by adding a temperature deviation (ΔT), which takes into account a difference between the temperature detected at said coupling area (9) and the temperature of the glass at said at least one corresponding cold area, to said dew point temperature (T_{DP}).

4. The system according to any of the preceding claims, wherein said digital processing unit (21) comprises a first correction stage (34), configured to receive as an input said initial target temperature (T_{TGTin}) and a minimum temperature value (Tₘᵢₙ) and to provide as an output a corrected target temperature (T_{TGTcorr}) as the maximum between said initial target temperature (T_{TGTin}) and said minimum temperature value (Tₘᵢₙ), wherein said minimum temperature value (Tₘᵢₙ) corresponds to a minimum temperature of the glass at said coupling area (9) designed to prevent ice formation on the electrical windshield (1).

5. The system according to claim 4, wherein said digital processing unit (21) further comprises a second correction stage (36), configured to receive said corrected target temperature (T_{TGTcorr}) as an input and to provide the actual target temperature (T_{TGT}) for thermal management of the electrical windshield (1) as an output, based on a saturation function that takes into account temperature limits due to the presence of the at least one corresponding hot area.

6. The system according to claim 5, wherein said second correction stage (36) is configured to generate the actual target temperature (T_{TGT}) as a function of a minimum between said corrected target temperature (T_{TGTcorr}) and a limit temperature value (T_{L}) for safe operation of said electrical windshield (1).

7. The system according to claim 6, wherein said digital processing unit (21) is configured to store at least one characterization map (28) of said electrical windshield (1) configured to define values of said limit temperature (TL) representing, for respective operating conditions, in terms of a supply voltage (Vₐₗ) supplied to said electrical windshield (1) and an external environment temperature, limit values for the temperature of the glass at said coupling area (9), which prevent critical threshold temperature values of the at least one corresponding hot area of the electrical windshield (1) from being exceeded.

8. The system according to any of the preceding claims, wherein said digital processing unit (21) comprises a control stage (38), configured to receive said target temperature (T_{TGT}) and said glass temperature signal (S_{GT}) as a feedback of the temperature of the electrical windshield (1) at said coupling area (9); said control stage (38) comprising: a first computing module (40) for determining an electrical power target (P_{TGT}) to be supplied for the heating of the electrical windshield (1), based on the target temperature (TTGT) and the glass temperature signal (SGT); an estimation module (42), configured to determine an estimation of electrical resistance of the heating element (2) inside the electrical windshield (1); a second computing module (44) for determining a voltage target (V_{TGT}) to be supplied to the heating element (2), calculated on the basis of the target electrical power (P_{TGT}) and the estimation of electrical resistance and also of an electrical model of the electrical windshield (1); and an output module (46), configured to output said control signal (S_{c}) for said heating element (2) on the basis of the target voltage (V_{TGT}).

9. The system according to any of the preceding claims, wherein said sensor assembly (8) is configured to further provide indications relating to the air temperature and relative humidity inside the passenger compartment (14), to provide a first temperature signal (S_{T1}) indicative of the temperature of the passenger compartment (14) at said coupling area (9) and a relative humidity signal (S_{RH}).

10. The system according to claim 9, wherein said digital processing unit (21) comprises a determination stage (30) for determining said dew point temperature (T_{DP}), which receives as an input the first temperature signal (S_{T1}) from the sensor assembly (8), a second temperature signal (S_{T2}) from a cabin temperature sensor (22) located inside the passenger compartment (14) and the relative humidity signal (S_{RH}); wherein said determination stage (30) is configured to: calculate a first dew point temperature (D_{P1}) based on the relative humidity signal (S_{RH}) and said first temperature signal (S_{T1}) and a second dew point temperature (D_{P2}) based on said relative humidity signal (S_{RH}) and said second temperature signal (S_{T2}); and generate said dew point temperature (T_{DP}) as the maximum between said first dew point temperature (D_{P1}) and second dew point temperature (D_{P2}).

11. The system according to any of the preceding claims, wherein said digital processing unit (21) is configured to perform at least defrosting and demisting functions of said electrical windshield (1), while also safeguarding the integrity of said electrical windshield (1), taking into account temperature limits that can be tolerated by said electrical windshield (1).

12. A motor vehicle (10) comprising the thermal management system (20) according to any of the preceding claims.

13. A method for thermal management of an electrical windshield (1) delimiting a passenger compartment portion (14) of a motor vehicle (10) and integrally provided with a heating element (2), comprising:
detecting, by means of a sensor assembly (8) coupled inside said passenger compartment (14) to the electrical windshield (1) at a coupling area (9), a glass temperature signal (S_{GT}) indicative of the temperature of the electrical windshield (1) at said coupling area (9); and
generating a control signal (S_{c}) to be provided to said heating element (2) to control heating of said electrical windshield (1) by means of a feedback control based on generation of a target glass temperature (T_{TGT}) and on said glass temperature signal (S_{GT}),
further comprising generating an initial target temperature (T_{TGTin}) for the electrical windshield (1), based on a dew point temperature (T_{DP}) determined inside the passenger compartment (14); and correcting said initial target temperature (T_{TGTin}) to generate said target glass temperature (T_{TGT}), as a function of a correlation between the temperature detected at said coupling area (9) and different temperatures of the electrical windshield (1) at at least one corresponding cold area or "cold spot" and at least one corresponding hot area or "hot spot".

14. The method according to claim 13, comprising storing at least one characterization map (28) of said electrical windshield (1), representative of said correlation between the temperature detected at said coupling area (9) and the temperature of the electrical windshield (1) at the at least one corresponding cold spot and the at least one corresponding hot spot.

15. The method according to claim 13 or 14, comprising performing at least defrosting and demisting functions of said electrical windshield (1), while also safeguarding the integrity of said electrical windshield (1), taking into account tolerable temperature limits.
